(19) **Europäisches Patentamt**
**European Patent Office**
**Office européen des brevets**

(11) **EP 4 661 390 A1**

(12) **EUROPEAN PATENT APPLICATION**
published in accordance with Art. 153(4) EPC

(43) Date of publication:
**10.12.2025 Bulletin 2025/50**

(51) International Patent Classification (IPC):
**H04N 17/00** (2006.01)

(21) Application number: **23919484.8**

(86) International application number:
**PCT/CN2023/137336**

(22) Date of filing: **08.12.2023**

(87) International publication number:
**WO 2024/159921 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.02.2023 CN 202310075294**

(71) Applicant: **Huizhou TCL Cloud Internet Corporation Technology Co., Ltd.**
**Huizhou, Guangdong 516006 (CN)**

(72) Inventors:
• **WANG, Jiake**
**Guangdong 516006 (CN)**
• **WANG, Quanlin**
**Guangdong 516006 (CN)**

(74) Representative: **Herrero & Asociados, S.L.**
**Edificio Aqua - Calle Agustín de Foxá, 4-10, 2oA 28036 Madrid (ES)**

(54) **PARAMETER MEASUREMENT METHOD AND APPARATUS, ELECTRONIC DEVICE, AND COMPUTER STORAGE MEDIUM**

(57) Provided are a parameter measurement method and apparatus, an electronic device, and a computer storage medium. The parameter measurement method comprises: determining target grayscale values of target images of a screen to be measured under different preset exposure durations, and acquiring brightness-grayscale mapping strategies corresponding to different preset exposure durations (S102); substituting the target gray scale values into the brightness-grayscale mapping strategies for mapping processing to obtain target brightness values corresponding to the target grayscale values (S103); and determining a display parameter measurement result of said screen according to the target brightness values (S 104). The method can improve the accuracy of the display parameter measurement result.

The target image of the screen under test under different preset exposure durations is acquired — S101

The target grayscale value of the target image is acquired, and brightness to gray mapping strategies corresponding to the different present exposure durations are determined — S102

The target grayscale value is substituted into the brightness-to-grayscale mapping strategy for mapping to obtain the target brightness value corresponding to the target grayscale value — S103

The display parameter measurement result of the screen under test is determined based on the target brightness value — S104

FIG. 1

EP 4 661 390 A1

## Description

The present disclosure claims priority to Chinese Patent Application No. 202310075294.3, filed on February 2, 2023, titled "PARAMETER MEASUREMENT METHOD AND APPARATUS, ELECTRONIC DEVICE, AND COMPUTER STORAGE MEDIUM", the entire content of which is incorporated herein by reference.

## TECHNICAL FIELD

The present disclosure relates to the field of image processing technology, specifically to a parameter measurement method and apparatus, electronic device, and computer storage medium.

## BACKGROUND

With the development of science and technology, electronic devices are increasingly popular among users, and their application fields are becoming more extensive.

Before or during the application of the electronic device, the brightness and chromaticity of the device are measured to ensure display quality of the electronic device. However, the current methods for measuring brightness and chromaticity of electronic devices have relatively low accuracy.

Technical Problem:

The methods for detecting brightness and chromaticity have relatively low accuracy.

## SUMMARY

The embodiments of the present disclosure provide a parameter measurement method and apparatus, an electronic device, and computer storage medium, which can solve the technical problem of low accuracy in brightness and chromaticity detection methods.

In one aspect, the present disclosure provides a parameter measurement method. The method includes: obtaining a target image of a screen under test at different preset exposure durations; determining a target grayscale value of the target images, and obtaining brightness-to-grayscale mapping strategies corresponding to the different preset exposure durations; substituting the target grayscale value into the brightness-to-grayscale mapping strategies for mapping processing to obtain a target brightness value corresponding to the target grayscale value; and determining a display parameter measurement result of the screen under test based on the target brightness value.

In another aspect, the present disclosure provides a parameter measurement apparatus. The apparatus includes: an image acquisition module, configured to acquire a target image of a screen under test at different preset exposure durations; a first determination module, configured to determine a target grayscale value of the target image and obtain brightness-to-grayscale mapping strategies corresponding to different preset exposure durations; a grayscale mapping module, configured to substitute the target grayscale value into the brightness to grayscale mapping strategies for mapping processing, to obtain a target brightness value corresponding to the target grayscale value; a second determination module, configured to determine a display parameter measurement result of the screen under test based on the target brightness value.

In addition, the present disclosure provides an electronic device. The electronic device includes a processor and a memory. The memory is configured to store executable instructions that, when executed by the processor, cause the processor to perform any of the foregoing parameter measurement methods.

In addition, the present disclosure provides a computer readable medium. The computer readable medium is configured to store executable instructions that, when executed by the processor, cause the processor to perform any of the foregoing parameter measurement methods.

In addition, the present disclosure provides a computer program product. The computer program product includes executable instructions that, when executed by the processor, cause the processor to perform any of the foregoing parameter measurement methods.

Technical Effect:

According to some embodiments of the present disclosure, the target image of the screen under test is obtained under different preset exposure durations; the target grayscale value of the target image is determined, and the brightness-to-grayscale mapping strategies corresponding to different preset exposure durations are obtained; the target grayscale value is substituted into the brightness-to-grayscale mapping strategy for mapping processing to obtain the target brightness value corresponding to the target grayscale value; based on the target brightness value, the display parameter measurement result of the screen under test is determined. By mapping the target grayscale values of the target images at different preset exposure durations using the brightness-to-grayscale mapping strategies for different preset exposure durations, multiple target brightness values can be obtained. These multiple target brightness values can then be used to determine the display parameter measurement result of the screen under test, thereby improving the accuracy of the display parameter measurement result.

## BRIEF DESCRIPTION OF THE DRAWINGS

In order to clearly explain the technical solutions in the embodiments of the present disclosure, the drawings used in the description of the embodiments will be briefly described below. Obviously, the drawings in the following description are merely some embodiments of the present disclosure. For those of ordinary skill in the art, other drawings may also be obtained based on these drawings without any creative work.

FIG. 1 is a flowchart of a parameter measurement method according to an embodiment of the present disclosure.

FIG. 2 is a schematic diagram of the method for obtaining calibration coefficients according to an embodiment of the present disclosure.

FIG. 3 is a schematic diagram of the brightness-to-grayscale mapping curve according to an embodiment of the present disclosure.

FIG. 4 is a schematic diagram of the method for obtaining the brightness-to-grayscale mapping function according to an embodiment of the present disclosure.

FIG. 5 is a schematic diagram of the brightness-to-grayscale mapping function according to an embodiment of the present disclosure.

FIG. 6 is a flowchart of another parameter measurement method according to another embodiment of the present disclosure.

FIG. 7 is a structural diagram of the parameter measurement apparatus according to an embodiment of the present disclosure.

FIG. 8 is a structural diagram of the electronic device according to an embodiment of the present disclosure.

FIG. 9 is a structural diagram of another electronic device according to an embodiment of the present disclosure.

**DETAILED DESCRIPTION**

The disclosure will now be described in detail with reference to the accompanying drawings and examples. Apparently, the described embodiments are only a part of the embodiments of the present disclosure, not all of the embodiments. All other embodiments obtained by a person of ordinary skill in the art based on the embodiments of the present invention without creative efforts shall fall within the protection scope of the present invention.

The present disclosure provides a parameter measurement method and apparatus, electronic device, and computer storage medium. The parameter measurement apparatus can be integrated into electronic device, which can be a server or a terminal etc.

The server can be an independent physical server, a server cluster or distributed system composed of multiple physical servers, or a cloud server providing foundational cloud computing services such as cloud services, cloud databases, cloud computing, cloud functions, cloud storage, network services, cloud communication, middleware services, domain name services, security services, network acceleration services (Content Delivery Network, CDN), as well as big data and artificial intelligence platforms.

The terminal can be, but is not limited to, a smartphone, tablet PC, laptop, desktop computer, smart speaker, smartwatch, etc. Terminals and servers can be directly or indirectly connected through wired or wireless communication methods, which are not restricted in the present disclosure.

Additionally, the term "multiple" in the present disclosure refers to two or more. The terms "first" and "second" are used to distinguish descriptions and should not be understood as implying relative importance.

The following provides detailed explanations. It should be noted that the order of description of the following embodiments does not serve as a limitation on the preferred order of the embodiments.

In this embodiment, the description will be made from the perspective of the parameter measurement apparatus. To facilitate the explanation of the parameter measurement method of the present disclosure, the following will provide a detailed explanation with the parameter measurement apparatus integrated into the terminal, i.e., with the terminal as the execution subject.

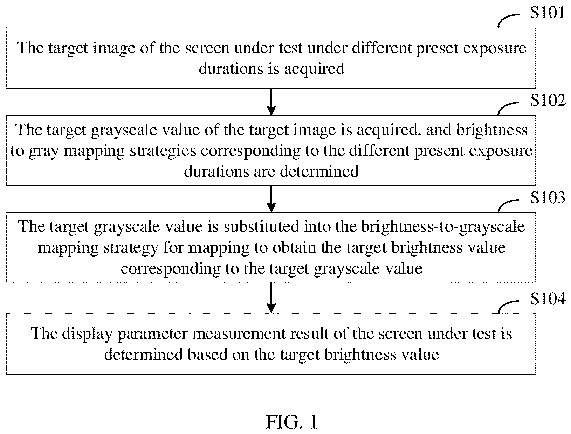

FIG. 1 is a schematic flowchart illustrating a parameter measurement method according to an embodiment of the present disclosure. The parameter measurement method may include operations described in S101 to S104.

S101: The target image of the screen under test (or screen to be tested) under different preset exposure durations is acquired.

The exposure duration refers to the photosensitive time of the image sensor, and different preset exposure durations refer to multiple preconfigured exposure durations.

The target image is a captured image of the screen under test. When capturing the screen under test, the display content of the screen may be preset content or randomly generated content, which is not limited in this embodiment.

A terminal may acquire the target images via its own camera or through cameras of other terminals, which then transmit the images to the terminal. The method of acquiring target images may vary based on practical scenarios, which is not limited in the present disclosure.

The camera may include an imaging lens and an image sensor.

S102: The target grayscale value of the target image is acquired, and brightness to grayscale mapping strategies corresponding to the different preset exposure durations are determined.

The target grayscale value may refer to the grayscale value of each pixel in the target image or the grayscale value of each pixel on the screen under test.

If the target image is a color image, the terminal may first convert it into a grayscale image and then determine the target grayscale value based on the grayscale image. If the target image is a grayscale image, the terminal may directly determine the target grayscale value based on the target image.

Methods for converting color images into grayscale images are not limited in this embodiment. For example, floating-point method or average method can be applied.

The brightness to grayscale mapping strategy defines the relationship between brightness and grayscale values, which may be represented via a mapping table or function. Mapping strategies may differ across exposure durations. For example, the pre-set exposure duration t1 may correspond to a brightness to grayscale mapping strategy y1, while the pre-set exposure duration t2 may correspond to a brightness to grayscale mapping strategy y2, where y1 differs from y2.

It should be noted, brightness in the mapping strategy may refer to the camera's exposure value, the illuminance of the imaging lens, or the screen's brightness.

The terminal may determine the target grayscale values after acquiring all target images under different exposure durations. Alternatively, the terminal may firstly filter a target exposure duration from the preset durations and then determine the grayscale values for the target image captured under the target exposure duration.

Specifically, when it is the first time to select the target exposure duration from different preset exposure durations, the target exposure duration may be randomly selected, or it can be a predefined exposure duration. For example, the target exposure duration may be a preset exposure duration t, or it may be a preset exposure duration t/16.

When the target grayscale values correspond to the screen's pixels, the process for determining the target grayscale value of the target image includes:

　　　1) Acquire a transformation matrix between the screen under test and the camera;
　　　2) Apply the transformation matrix to the target image to generate a transformed image;
　　　3) Determine the target grayscale values based on the transformed image.

Using the transformation matrix to transform the target image may include multiplying the transformation matrix with the target image to acquire the transformed image.

Due to limitations of manufacturing procedures, screens may exhibit display issues such as Mura (referring to non-uniformity), dead pixels, light leakage, or discoloration. If only the grayscale values of each pixel in the target image are obtained, it is impossible to directly correlate the grayscale values of each pixel in the target image with the brightness values of each corresponding pixel on the screen under test. Consequently, this hinders the ability to determine whether individual pixels on the screen are defective based on their brightness values. To address this, in this embodiment of the present disclosure, the target image is processed using a transformation matrix to generate a transformed image. This allows the determination of the target grayscale value for each pixel on the screen under test based on the transformed image. From these target grayscale values, the target brightness value for each pixel on the screen can be derived, enabling precise detection of defects in individual pixels based on their brightness values.

Furthermore, since the target brightness values of all pixels on the screen can be obtained, various display issues can be digitally archived, and the severity of these issues can be quantified.

Optionally, steps for determining target grayscale values of the target image may include:

　　　1) Acquire the number of row pixels and column pixels of the screen under test, as well as the sampling rate of the transformed image relative to the screen.
　　　2) Divide the transformed image into multiple pixel clusters based on the row and column pixel counts of the screen.
　　　3) Determine the target grayscale value for each pixel on the screen under test using the sampling rate and the pixel clusters.

For example, if the screen has "a" row pixels and "b" column pixels, and the sampling rate is "n", the transformed image is divided into "a times b" pixel clusters. Each cluster contains "n*n" pixels and corresponds to a single pixel on the screen. The target grayscale value for each screen pixel can be determined based on the grayscale values of the pixels within its corresponding cluster.

In one embodiment, the average grayscale value of the pixels in each cluster may be used as the target grayscale value for the corresponding screen pixel. In addition, to improve accuracy, the average grayscale value may be calculated using a floating-point method to retain precision.

In some embodiments, to acquire more accurate target grayscale values, the operation of acquiring the transformed image by using the transformation matrix to transform the target image may include:

　　　1) Apply the transformation matrix to the target image to generate a candidate transformed image.
　　　2) Perform linear interpolation on the candidate transformed image to generate the transformed image.

The candidate transformed image may contain pixels with zero values due to the transformation matrix. Thus, to eliminate these artifacts and ensure accurate target grayscale values, linear interpolation is applied to the candidate image in this embodiment, resulting in a transformed image with no zero-value pixels.

In other embodiments, the operation of acquiring the transformation matrix between the screen under test and the camera includes:

1) Determining multiple source point coordinates of the screen under test based on the target image.

2) Determining multiple target point coordinates corresponding to the camera based on the pixel count of the screen under test.

3) Calculating the transformation matrix between the screen under test and the camera using the source and target point coordinates.

Source point coordinates may include the top-left, top-right, bottom-left, and bottom-right corner coordinates of the screen under test. Pixel counts of the screen under test may refer to the number of row pixels and column pixels of the screen under test. Target point coordinates correspond to the top-left, top-right, bottom-left, and bottom-right corner coordinates of the camera's image sensor.

The operation of determining multiple target point coordinates corresponding to the camera based on the pixel count of the screen under test may include:

1) Obtain the sampling rate, and determine the top-left coordinates of the image sensor of the camera based on the sampling rate and the row pixel count of the screen under test.

2) Determine the bottom-right coordinates of the image sensor of the camera based on the sampling rate and the column pixel count of the screen under test.

3) Determine the top-right coordinates of the image sensor of the camera based on the row pixel count and the column pixel count of the screen under test.

For instance, the row pixel count of the screen under test is equal to "a", the column pixel count is equal to "b", the sampling rate is equal to "n". Accordingly, the top-left coordinates of the image sensor of the camera is (n*a, 0), the bottom-right coordinates of the image sensor of the camera is (0, n*b), the top-right coordinates of the image sensor of the camera is (n*a, n*b), and the bottom-left coordinates of the image sensor of the camera is (0, 0).

The sampling rate can be determined based on the pixel count of the screen under test (where pixel count can be interpreted as pixel dimensions), the magnification of the imaging lens in the camera, and the pixel count of the image sensor in the camera. For instance, the sampling rate may be calculated by multiplying the pixel count of the screen under test by the magnification of the imaging lens, then dividing the result by the pixel count of the image sensor to obtain a quotient. This quotient is taken as the sampling rate. If the quotient is not an integer, it should be rounded up to the nearest integer to derive the final sampling rate.

In other embodiments, the operation of determining the transformation matrix between the screen under test and the camera using the source and target point coordinates may include:

1) Determine a source point matrix based on the source point coordinates, and determine a target matrix based on the target point coordinates.

2) Acquire the target point matrix by multiplying the source point matrix by the matrix to be solved.

3) Solve the matrix to be solved based on the source point matrix and the target point matrix, to obtain the transformation matrix between the screen under test and the camera.

S103. The target grayscale value is substituted into the brightness-to-grayscale mapping strategy for mapping to obtain the target brightness value corresponding to the target grayscale value.

Since different brightness-to-grayscale mapping strategies are pre-set for different preset exposure durations, after obtaining the target images for different preset exposure durations, the target grayscale values of the target images can be substituted into the brightness-to-grayscale mapping strategy for mapping to obtain the target brightness values corresponding to the target grayscale values. This eliminates the need for multiple sets of optical attenuation sheets or multiple detectors to achieve the detection of display parameters over a wide dynamic range, thereby reducing costs.

Moreover, since the brightness-to-grayscale mapping strategies differ for different preset exposure durations, the target brightness values obtained based on different brightness-to-grayscale mapping strategies are more accurate, making the subsequent determination of the display parameter results for the screen under test based on the target brightness values more precise.

When the brightness in the brightness-to-grayscale mapping strategy refers to the camera's exposure value, the process of substituting the target grayscale values into the brightness-to-grayscale mapping strategy for mapping to obtain the target brightness values corresponding to the target grayscale values can include:

1) Substituting the target grayscale values into the brightness-to-grayscale mapping strategy for mapping to obtain the exposure values corresponding to the target grayscale values;

2) Determining the illuminance on the surface of the imaging lens in the camera based on the exposure values;

3) Determining the target brightness values corresponding to the target grayscale values based on the illuminance on the surface of the imaging lens in the camera.

The exposure value can be substituted into the following formula to calculate the illuminance on the surface of the imaging lens:

$$\text{EV} = log_2 \frac{E}{2.5}$$

where EV represents the exposure value, and E represents the illuminance on the surface of the imaging lens.

The illuminance on the surface of the imaging lens can be substituted into the following formula to calculate the target brightness value corresponding to the target grayscale value:

$$\text{E} = \text{k} \frac{b}{z^2}$$

where k represents the compensation coefficient, z represents the distance from the imaging lens to the screen under test (also the minimum focusing distance of the imaging lens), and b represents the target brightness value corresponding to the target grayscale value.

S 104. The display parameter measurement result of the screen under test is determined based on the target brightness value.

After obtaining the target brightness value, the terminal can determine the display parameter measurement result of the screen under test based on the target brightness values. The display parameters can include at least one of brightness, chromaticity, and color temperature. The display parameter measurement results can include at least one of: brightness detection results, chromaticity detection results, and color temperature detection results. The color temperature detection results can be determined based on the chromaticity coordinates of the screen under test.

When the terminal selects the target exposure duration from different preset exposure durations and obtains the target image under the target exposure duration, the process of determining the display parameter measurement result of the screen under test based on the target brightness value can be as follows.

If the target brightness value meets the preset detection condition, the display parameter measurement result of the screen under test is determined based on the target brightness value.

If the target brightness value does not meet the preset detection condition, the process returns to the step of selecting the target exposure duration from different preset exposure durations.

Specifically, the target brightness value can be determined to meet the preset detection condition based on the pixel count of the screen under test. For example, when the difference between the pixel count of the screen under test and the number of target brightness values is within a preset range, it can be determined that the target brightness value meets the preset detection condition.

In the present embodiment, the target exposure duration is selected from different preset exposure durations, and the target image under the target exposure duration is obtained. If the target brightness values determined based on the target grayscale values of the target image meet the preset detection condition, the display parameter measurement result of the screen under test is determined based on the target brightness values. If the target brightness values determined based on the target grayscale values of the target image do not meet the preset detection condition, the process returns to the step of selecting the target exposure duration from different preset exposure durations. This eliminates the need to obtain all target images for different preset exposure durations, reduces the time required to obtain the target image, accelerates the process of obtaining the target brightness value, and thereby speeds up the process of obtaining the display parameter measurement result of the screen under test.

Optionally, to further accelerate the process of obtaining the target brightness value, after the terminal selects the target exposure duration from different preset exposure durations, obtains the target image under the target exposure duration, and determine the target grayscale values of the target image, the target grayscale value can be increased and decreased by a first grayscale value to obtain multiple calculated grayscale values. Then, the target grayscale values, the calculated grayscale values, and the grayscale values between the target grayscale values and the calculated grayscale values can be substituted into the brightness-to-grayscale mapping strategy for mapping, resulting in multiple target brightness values. Subsequently, it can be determined whether the target brightness values meet the preset detection condition.

The first grayscale value is a pre-set grayscale value and can be selected based on actual conditions, which is not limited in the present disclosure.

When the display parameter includes brightness, the process of determining the display parameter measurement result of the screen under test based on the target brightness values can be as follows: determining the brightness detection result of the screen under test based on the target brightness.

When the display parameter includes chromaticity, the process of determining the display parameter measurement result of the screen under test based on the target brightness value can include:

1) Using a second optical filter corresponding to the second stimulus parameter to obtain the first image of the screen under test under different preset exposure durations, and using a third optical filter corresponding to the third stimulus parameter to obtain the second image of the screen under test under different preset exposure durations;

2) Determine the second stimulus value of the second stimulus parameter based on the first image and the brightness-to-grayscale mapping strategy;

3) Determine the third stimulus value of the third stimulus parameter based on the second image and the brightness-to-grayscale mapping strategy;
4) Determine the chromaticity detection result of the screen under test based on the first stimulus value, the second stimulus value, and the third stimulus value.

In this solution, the target image can be the image collected under the first optical filter, and the transmission spectrum of the first optical filter can be $T_1(\lambda)$, which can be determined based on the spectral luminous efficiency function and the quantum efficiency function of the image sensor. That is, the transmission spectrum of the first optical filter can be:

$$T_1(\lambda) = \frac{V(\lambda)}{Q(\lambda)} / \max \left( \frac{V(\lambda)}{Q(\lambda)} \right)$$

where $\lambda$ represents the wavelength, $V(\lambda)$ represents the spectral luminous efficiency function, and $Q(\lambda)$ represents the quantum efficiency function of the image sensor.

The transmission spectrum of the second optical filter can be $T_2(\lambda)$, which can be determined based on the x color matching function and the spectral sensitivity of the image sensor to incident light. That is, the transmission spectrum of the second optical filter can be:

$$T_2(\lambda) = \frac{x(\lambda)}{Q(\lambda)} / \max \left( \frac{x(\lambda)}{Q(\lambda)} \right)$$

In the formula, $x(\lambda)$ represents the x color matching function; $Q(\lambda)$ represents the quantum efficiency function of the image sensor, and it can also represent the spectral sensitivity of the image sensor to incident light.

The transmittance spectrum of the third optical filter can be $T_3(\lambda)$, which is determined based on the z color matching function and the spectral sensitivity of the image sensor to incident light. That is, the transmittance spectrum of the third optical filter can be:

$$T_3(\lambda) = \frac{z(\lambda)}{Q(\lambda)} / \max \left( \frac{z(\lambda)}{Q(\lambda)} \right)$$

In the formula, $z(\lambda)$ represents the z color matching function; $Q(\lambda)$ represents the quantum efficiency function of the image sensor, and it can also represent the spectral sensitivity of the image sensor to incident light.

The target luminance value can be the first stimulus value of the first stimulus parameter. The first stimulus parameter, second stimulus parameter, and third stimulus parameter can be referred to as tri-stimulus parameters. Among them, the first stimulus parameter can be the Y stimulus parameter, the second stimulus parameter can be the X stimulus parameter, and the third stimulus parameter can be the Z stimulus parameter. Alternatively, the first stimulus parameter can be the green primary stimulus parameter, the second stimulus parameter can be the red primary stimulus parameter, and the third stimulus parameter can be the blue primary stimulus parameter.

The terminal can determine the first target grayscale value based on the first image, and then substitute the first target grayscale value into the luminance-grayscale mapping strategy for mapping to obtain the second stimulus value of the second stimulus parameter. Based on the second image, the terminal can determine the second target grayscale value, and then substitute the second target grayscale value into the luminance-grayscale mapping strategy for mapping to obtain the third stimulus value of the third stimulus parameter.

In the present disclosure, the first stimulus value, second stimulus value, and third stimulus value are determined through images collected under different filters and the luminance-grayscale mapping strategy. Then, based on the first stimulus value, second stimulus value, and third stimulus value, the chromaticity detection result of the screen under test is determined.

In one embodiment, the first stimulus value, second stimulus value, and third stimulus value can be normalized to determine the chromaticity coordinates of the screen under test. Based on the chromaticity coordinates, the chromaticity detection result of the screen under test is determined. The normalization process can be:

$$x = \frac{X}{X + Y + Z}$$

$$y = \frac{Y}{X + Y + Z}$$

where x and y represent the chromaticity coordinates of the screen under test.

In some embodiments, the operation of determining the second stimulus value of the second stimulus parameter based on the first image and the luminance-grayscale mapping strategy includes:

1) Determining the candidate stimulus value of the second stimulus parameter based on the first image and the luminance-grayscale mapping strategy;
2) Obtaining the calibration coefficient of the second stimulus parameter;
3) Calibrating the candidate stimulus value of the second stimulus parameter using the calibration coefficient to obtain the second stimulus value of the second stimulus parameter.

The terminal can determine the first target grayscale value based on the first image, and then substitute the first target grayscale value into the luminance-grayscale mapping strategy for mapping to obtain the candidate stimulus value of the second stimulus parameter.

In the present disclosure, the calibration coefficient of the second stimulus parameter is multiplied by the candidate stimulus value of the second stimulus parameter to obtain the second stimulus value of the second stimulus parameter. This achieves calibration of the second stimulus value, making the obtained second stimulus value more accurate.

In other embodiments, before the operation of obtaining the calibration coefficient of the second stimulus parameter, the method further includes:

1) Obtain the first calibration image collected under the first optical filter and determine the grayscale value of the first calibration image;
2) Obtain the second calibration image collected under the second optical filter and determine the grayscale value of the second calibration image;
3) Determine the calibration coefficient of the second stimulus parameter based on the grayscale value of the first calibration image and the grayscale value of the second calibration image.

The first calibration image and the second calibration image can be images of the calibration screen. The grayscale value of the first calibration image can refer to the grayscale value of the central pixel of the first calibration image, and the grayscale value of the second calibration image can refer to the grayscale value of the central pixel of the second calibration image. Alternatively, the grayscale value of the first calibration image can refer to the grayscale value of the central pixel of the calibration screen, and the grayscale value of the second calibration image can refer to the grayscale value of the central pixel of the calibration screen.

The process of determining the calibration coefficient of the second stimulus parameter based on the grayscale value of the first calibration image and the grayscale value of the second calibration image can include: dividing the grayscale value of the first calibration image by the grayscale value of the second calibration image to obtain a ratio, and using the ratio as the calibration coefficient of the second stimulus parameter. That is, the grayscale values of the first calibration image and the second calibration image can be substituted into the following formula to obtain the calibration coefficient of the second stimulus parameter:

$$K_x = \frac{g_y}{g_x}$$

where $K_x$ represents the calibration coefficient of the second stimulus parameter; $g_y$ represents the grayscale value of the first calibration image; and $g_x$ represents the grayscale value of the second calibration image.

In the present disclosure, since the equal-energy white point coordinates can be used to determine the luminance mixing ratio of the three channels, the calibration screen can display the equal-energy white point coordinates (equal-energy white point coordinates are (0.333, 0.333)). Then, the first calibration image of the calibration screen is collected under the first optical filter, and the second calibration image of the calibration screen is collected under the second optical filter, so as to determine the calibration coefficient of the second stimulus parameter based on the grayscale value of the first calibration image and the grayscale value of the second calibration image.

In other embodiments, the operation of determining the third stimulus value of the third stimulus parameter based on the second image and the luminance-grayscale mapping strategy includes:

1) Determining the candidate stimulus value of the third stimulus parameter based on the second image and the luminance-grayscale mapping strategy;
2) Obtaining the calibration coefficient of the third stimulus parameter;
3) Calibrating the candidate stimulus value of the third stimulus parameter based on the calibration coefficient of the third stimulus parameter to obtain the third stimulus value of the third stimulus parameter.

The terminal can determine the second target grayscale value based on the second image, and then substitute the second target grayscale value into the luminance-grayscale mapping strategy for mapping processing to obtain the candidate stimulus value of the third stimulus parameter.

In the present disclosure, the calibration coefficient of the third stimulus parameter is multiplied by the candidate stimulus value of the third stimulus parameter to obtain the third stimulus value of the third stimulus parameter, thereby achieving calibration of the third stimulus value and making the obtained third stimulus value more accurate.

Optionally, before the operation of obtaining the calibration coefficient of the third stimulus parameter, the method may further include:

1) Obtaining the first calibration image collected under the first optical filter and determining the grayscale value of the first calibration image;
2) Obtaining the third calibration image collected under the third optical filter and determining the grayscale value of the third calibration image;
3) Determining the calibration coefficient of the third stimulus parameter based on the grayscale value of the first calibration image and the grayscale value of the third calibration image.

The first calibration image and the third calibration image can be images of the calibration screen. The grayscale value of the first calibration image can refer to the grayscale value of the central pixel of the first calibration image, and the grayscale value of the third calibration image can refer to the grayscale value of the central pixel of the third calibration image. Alternatively, the grayscale value of the first calibration image can refer to the grayscale value of the central pixel of the calibration screen, and the grayscale value of the third calibration image can refer to the grayscale value of the central pixel of the calibration screen.

The process of determining the calibration coefficient of the third stimulus parameter based on the grayscale value of the first calibration image and the grayscale value of the third calibration image can be as follows: dividing the grayscale value of the first calibration image by the grayscale value of the third calibration image to obtain a ratio, and using the ratio as the calibration coefficient of the third stimulus parameter. That is, the grayscale values of the first calibration image and the third calibration image can be substituted into the following formula to obtain the calibration coefficient of the third stimulus parameter:

$$K_z = \frac{g_y}{g_z}$$

where $K_z$ represents the calibration coefficient of the third stimulus parameter; $g_y$ represents the grayscale value of the first calibration image; and $g_z$ represents the grayscale value of the third calibration image.

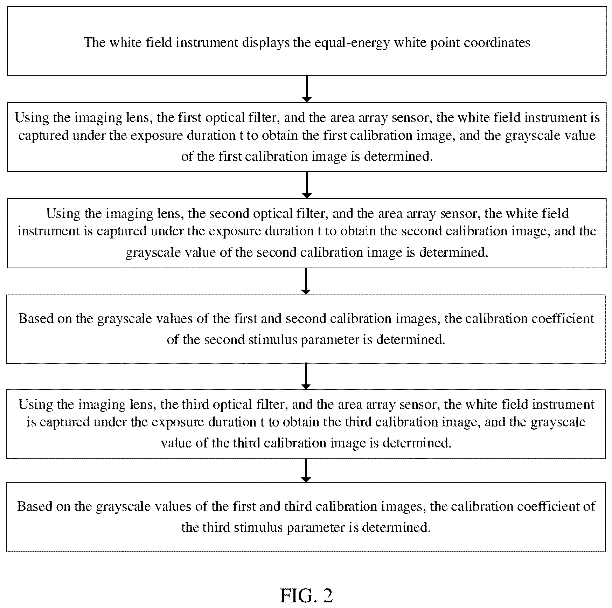

For example, as shown in FIG. 2, the image sensor is an area array sensor, the calibration screen is a white field instrument, and the preset exposure duration is t. The white field instrument displays the equal-energy white point coordinates. Using the imaging lens, the first optical filter, and the area array sensor, the white field instrument is captured under the exposure duration t to obtain the first calibration image, and the grayscale value of the first calibration image is determined.

Using the imaging lens, the second optical filter, and the area array sensor, the white field instrument is captured under the exposure duration t to obtain the second calibration image, and the grayscale value of the second calibration image is determined.

Based on the grayscale values of the first and second calibration images, the calibration coefficient of the second stimulus parameter is determined.

Using the imaging lens, the third optical filter, and the area array sensor, the white field instrument is captured under the exposure duration t to obtain the third calibration image, and the grayscale value of the third calibration image is determined.

Based on the grayscale values of the first and third calibration images, the calibration coefficient of the third stimulus parameter is determined.

In other embodiments, prior to the operation of obtaining different preset exposure durations, the process further includes:

1) Obtaining multiple calibration luminance values and different preset exposure durations;
2) Capturing calibration images of the calibration screen for multiple calibration luminance values under each preset exposure duration;
3) Determining the calibration grayscale values corresponding to the multiple calibration luminance values based on the calibration images;
4) Determining the luminance-grayscale mapping strategy corresponding to the preset exposure duration based on the multiple calibration luminance values and calibration grayscale values.

When the luminance-grayscale mapping strategy is expressed through a mapping function, the process of obtaining multiple calibration luminance values can include:

1) Obtaining intermediate calibration luminance values;
2) Adjusting the intermediate calibration luminance values by a multiplier to obtain multiple calibration luminance values;
3) Using the intermediate calibration luminance values and the multiplier-adjusted calibration luminance values as the multiple calibration luminance values.

Here, the multiplier-adjusted calibration luminance values refer to multiples of the intermediate calibration luminance values. For example, the multiplier-adjusted calibration luminance values can be half or double of the intermediate calibration luminance values.

It should be understood that the terminal can select a calibration exposure duration from different preset exposure durations. Then, under the calibration exposure duration, the terminal captures calibration images of the calibration screen for multiple calibration luminance values. Based on the calibration images, the terminal determines the calibration grayscale values corresponding to the multiple calibration luminance values. Using the multiple calibration luminance values and calibration grayscale values, the terminal determines the luminance-grayscale mapping strategy corresponding to the calibration exposure duration. During this process, the terminal can check whether the luminance-grayscale mapping strategy covers the local maximum luminance of the calibration screen. If the strategy does not cover the local maximum luminance, the terminal returns to the step of selecting a calibration exposure duration from different preset exposure durations.

Alternatively, the terminal can initially use the initial exposure duration as the preset exposure duration. In this case, there is only one preset exposure duration, which is directly used as the calibration exposure duration. If the luminance-grayscale mapping strategy does not cover the local maximum luminance of the calibration screen, the terminal adjusts the initial exposure duration to obtain an adjusted exposure duration. The adjusted exposure duration is then used as the calibration exposure duration. The process returns to capturing calibration images of the calibration screen for multiple calibration luminance values under the calibration exposure duration. At this point, the preset exposure duration includes both the adjusted exposure duration and the initial exposure duration.

Optionally, since the luminance-grayscale mapping curve includes both nonlinear and linear parts, to more accurately obtain the luminance-grayscale mapping curve, the calibration luminance values include intermediate calibration luminance values. The process of obtaining the initial exposure duration includes:

1) Capturing initial calibration images of the calibration screen for the intermediate calibration luminance values under different exposure durations;
2) Determining the initial grayscale values corresponding to the initial calibration images.
3) Taking the initial exposure time corresponding to the initial calibration image that satisfies the preset grayscale value of the initial grayscale value as the initial exposure time.

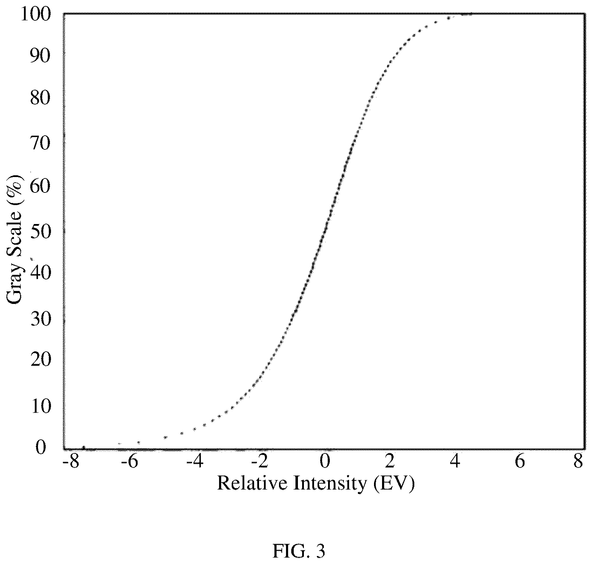

The preset grayscale value can be the function value on the linear portion. For example, the brightness-to-grayscale mapping curve can be as shown in FIG. 3, where the horizontal axis (Relative Intensity) represents the exposure amount, and the vertical axis (Gray Scale) represents the grayscale. The preset grayscale value can be 50% grayscale value or 49% grayscale value.

In the present disclosure, the initial grayscale value of the function value on the linear portion is used as the initial exposure time corresponding to the initial calibration image. The initial exposure time is then adjusted to obtain different preset exposure durations, so that the brightness-to-grayscale mapping strategies for different preset exposure durations are linear mapping strategies.

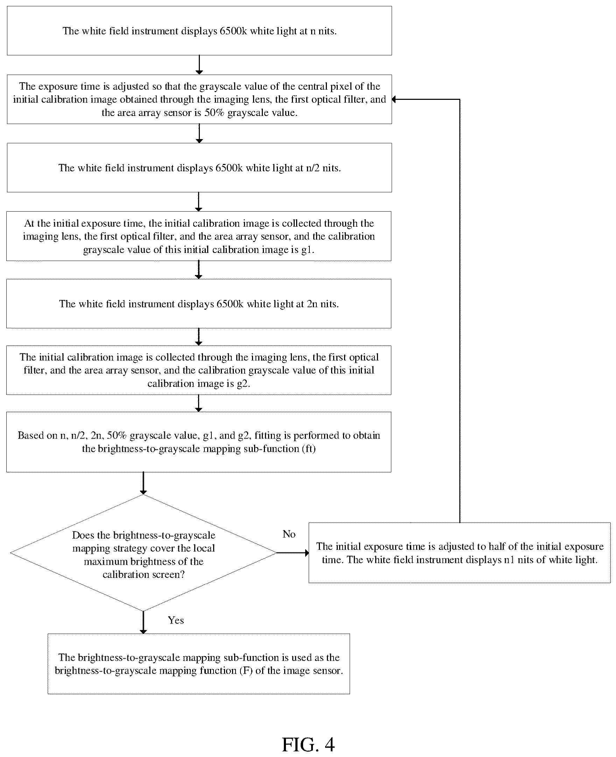

For instance, when the brightness-to-grayscale mapping strategy is expressed by a mapping function, it can be as shown in FIG. 4. The calibration screen is a white field instrument, which displays 6500k white light at n nits, i.e., the calibration brightness value is n. The exposure time is adjusted so that the grayscale value of the central pixel of the initial calibration image obtained through the imaging lens, the first optical filter, and the area array sensor is 50% grayscale value. The exposure time at this moment is recorded as the initial exposure time t.

The white field instrument displays 6500k white light at n/2 nits, i.e., the calibration brightness value is n/2. At the initial exposure time, the initial calibration image is collected through the imaging lens, the first optical filter, and the area array sensor, and the calibration grayscale value of this initial calibration image is g1.

The white field instrument displays 6500k white light at 2n nits, i.e., the calibration brightness value is 2n. Under the initial exposure time, the initial calibration image is collected through the imaging lens, the first optical filter, and the area array sensor, and the calibration grayscale value of this initial calibration image is g2.

Based on n, n/2, 2n, 50% grayscale value, g1, and g2, fitting is performed to obtain the brightness-to-grayscale mapping sub-function, where g represents grayscale, ft represents brightness, and k1, k2, and w are linear fitting parameters. In this method, if the brightness-to-grayscale mapping strategy does not cover the local maximum brightness of the calibration screen, the initial exposure time is adjusted to half of the initial exposure time. The white field instrument displays n1 nits of white light. The process returns to the operation of adjusting the exposure time to make the grayscale value of the central pixel of the initial calibration image obtained through the imaging lens, the first optical filter, and the area array sensor 50% grayscale value.

If the brightness-to-grayscale mapping strategy covers the local maximum brightness of the calibration screen, the brightness-to-grayscale mapping sub-function is used as the brightness-to-grayscale mapping function f of the image sensor.

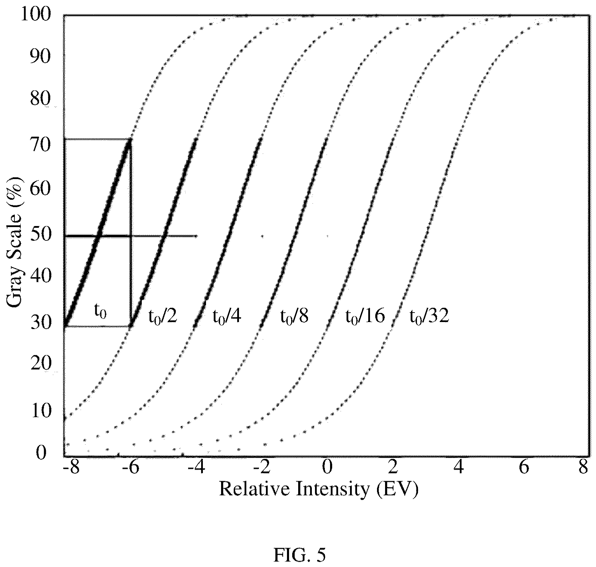

The brightness-to-grayscale mapping function f can be as shown in the gray area in FIG. 5, where the horizontal axis (Relative Intensity) represents the exposure amount, and the vertical axis (Gray Scale) represents the grayscale. That is, the brightness-to-grayscale mapping function f is a piecewise linear function, including brightness-to-grayscale mapping sub-functions ft, ft/2, ft/4, ft/8, ft/16, and ft/32.

As can be seen from the above, in the present disclosure, the target image of the screen under test is obtained under different preset exposure durations; the target grayscale value of the target image is determined, and the brightness-to-grayscale mapping strategies corresponding to different preset exposure durations are obtained; the target grayscale value is substituted into the brightness-to-grayscale mapping strategy for mapping processing to obtain the target brightness value corresponding to the target grayscale value; based on the target brightness value, the display parameter measurement result of the screen under test is determined. By mapping the target grayscale values of the target images at different preset exposure durations using the brightness-to-grayscale mapping strategies for different preset exposure durations, multiple target brightness values can be obtained. These multiple target brightness values can then be used to determine the display parameter measurement result of the screen under test, thereby improving the accuracy of the display parameter measurement result.

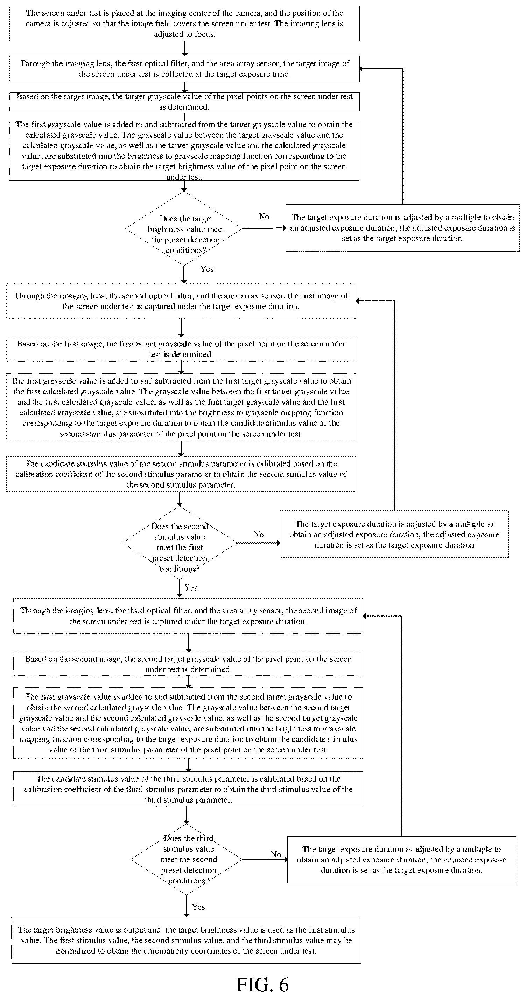

Below, based on FIG. 6, the process of determining the display parameter measurement result is described, taking the image sensor as an area array sensor, the brightness-to-grayscale mapping strategy as the brightness-to-grayscale mapping function, and the display parameters including brightness and color temperature, i.e., the display parameter measurement result includes brightness detection result and color temperature detection result.

The screen under test is placed at the imaging center of the camera, and the position of the camera is adjusted so that the image field covers the screen under test. The imaging lens is adjusted to focus. Through the imaging lens, the first optical filter, and the area array sensor, the target image of the screen under test is collected at the target exposure time (at this time, the target exposure time is t). Based on the target image, the target grayscale value of the pixel points on the screen under test is determined. The first grayscale value is added to and subtracted from the target grayscale value to obtain the calculated grayscale value. The grayscale value between the target grayscale value and the calculated grayscale value, as well as the target grayscale value and the calculated grayscale value, are substituted into the brightness to grayscale mapping function corresponding to the target exposure duration to obtain the target brightness value of the pixel point on the screen under test.

It is determined whether the target brightness value meets the preset detection conditions. If the preset detection conditions are not met, the target exposure duration is adjusted by a multiple to obtain an adjusted exposure duration, the adjusted exposure duration is set as the target exposure duration, and the process returns to the step of capturing the target image of the screen under test through the imaging lens, the first optical filter, and the area array sensor under the target exposure duration.

If the preset detection conditions are met, the first optical filter is replaced with the second optical filter. Through the imaging lens, the second optical filter, and the area array sensor, the first image of the screen under test is captured under the target exposure duration (at this time, the target exposure duration is t). Based on the first image, the first target grayscale value of the pixel point on the screen under test is determined. The first grayscale value is added to and subtracted from the first target grayscale value to obtain the first calculated grayscale value. The grayscale value between the first target grayscale value and the first calculated grayscale value, as well as the first target grayscale value and the first calculated grayscale value, are substituted into the brightness to grayscale mapping function corresponding to the target exposure duration to obtain the candidate stimulus value of the second stimulus parameter of the pixel point on the screen under test. The candidate stimulus value of the second stimulus parameter is calibrated based on the calibration coefficient of the second stimulus parameter to obtain the second stimulus value of the second stimulus parameter.

It is determined whether the second stimulus value meets the first preset detection conditions. The first preset detection conditions can be determined based on the number of pixels on the screen under test. For example, when the difference between the number of pixels on the screen under test and the number of second stimulus values is within the first preset range, it can be determined that the second stimulus value meets the first preset detection conditions. If the first preset detection conditions are not met, the target exposure duration is adjusted by a multiple to obtain an adjusted exposure duration, the adjusted exposure duration is set as the target exposure duration, and the process returns to the step of capturing the first image of the screen under test through the imaging lens, the second optical filter, and the area array sensor under the target exposure duration.

If the first preset detection conditions are met, the second optical filter is replaced with the third optical filter. Through the imaging lens, the third optical filter, and the area array sensor, the second image of the screen under test is captured under the target exposure duration (at this time, the target exposure duration is t). Based on the second image, the second target grayscale value of the pixel point on the screen under test is determined. The first grayscale value is added to and subtracted from the second target grayscale value to obtain the second calculated grayscale value. The grayscale value between the second target grayscale value and the second calculated grayscale value, as well as the second target grayscale value and the second calculated grayscale value, are substituted into the brightness to grayscale mapping function corresponding to the target exposure duration to obtain the candidate stimulus value of the third stimulus parameter of the pixel point on the screen under test. The candidate stimulus value of the third stimulus parameter is calibrated based on the calibration coefficient of the third stimulus parameter to obtain the third stimulus value of the third stimulus parameter.

It is determined whether the third stimulus value meets the second preset detection conditions. The second preset detection conditions can be determined based on the number of pixels on the screen under test. For example, when the difference between the number of pixels on the screen under test and the number of third stimulus values is within the second preset range, it can be determined that the third stimulus value meets the second preset detection conditions. If the second preset detection conditions are not met, the target exposure duration is adjusted by a multiple to obtain an adjusted exposure duration, the adjusted exposure duration is set as the target exposure duration, and the process returns to the step of capturing the second image of the screen under test through the imaging lens, the third optical filter, and the area array sensor under the target exposure duration.

If the second preset detection conditions are met, the target brightness value is output and the target brightness value is used as the first stimulus value. The first stimulus value, the second stimulus value, and the third stimulus value may be normalized to obtain the chromaticity coordinates of the screen under test.

To facilitate implementation of the parameter measurement method provided in the present disclosure, the present disclosure also provides an apparatus based on the above parameter measurement method. The meanings of the terms described below are the same as those in the parameter measurement method described above, and the specific implementation details can refer to the descriptions in the method embodiments.

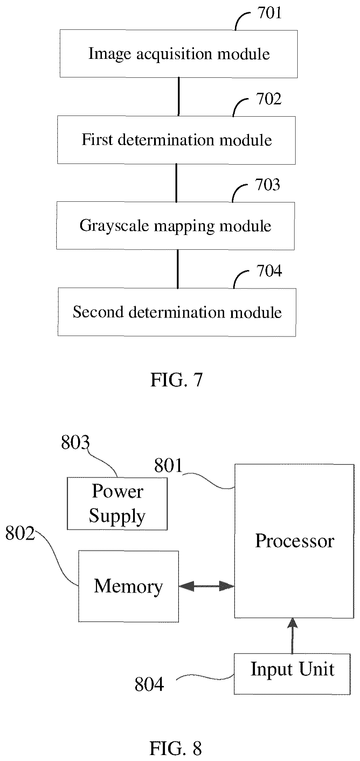

For example, as shown in FIG. 7, the parameter measurement apparatus may include:

1) Image acquisition module 701, configured to acquire the target image of the screen under test under different preset exposure durations.
2) First determination module 702, configured to determine the target grayscale value of the target image and obtain the brightness to grayscale mapping strategy corresponding to different preset exposure durations.
3) Grayscale mapping module 703, configured to substitute the target grayscale value into the brightness to grayscale mapping strategy for mapping processing to obtain the target brightness value corresponding to the target grayscale value.
4) Second determination module 704, configured to determine the display parameter measurement result of the screen under test based on the target brightness value.

Optionally, the image acquisition module 701 is specifically configured to perform:

1) Selecting the target exposure duration from different preset exposure durations;
2) Acquiring the target image under the target exposure duration.

Correspondingly, the second determination module 704 is specifically configured to perform:

1) If the target brightness value meets the preset detection condition, determining the display parameter measurement result of the screen under test based on the target brightness value;
2) If the target brightness value does not meet the preset detection condition, returning to the step of selecting the target exposure duration from different preset exposure durations.

Optionally, the first determination module 702 is specifically configured to perform:

1) Acquiring the transformation matrix between the screen under test and the camera used to acquire the target image;
2) Performing transformation on the target image based on the transformation matrix to obtain the transformed image;
3) Determining the target grayscale value of the target image based on the transformed image.

Optionally, the first determination module 702 is specifically configured to perform:

1) Determining multiple source point coordinates of the screen under test based on the target image;
2) Determining multiple target point coordinates corresponding to the camera based on the pixel count of the screen under test;
3) Determining the transformation matrix between the screen under test and the camera based on the source point coordinates and the target point coordinates.

Optionally, the display parameter measurement result includes the chromaticity detection result, the target brightness value is the first stimulus value of the first stimulus parameter, and the target image is the image acquired under the first optical filter.

Correspondingly, the second determination module 704 is specifically configured to perform:

1) Acquiring the first image of the screen under test under different preset exposure durations through the second optical filter corresponding to the second stimulus parameter, and acquiring the second image of the screen under test under different preset exposure durations through the third optical filter corresponding to the third stimulus parameter;
2) Determining the second stimulus value of the second stimulus parameter based on the first image and the brightness-to-grayscale mapping strategy;
3) Determining the third stimulus value of the third stimulus parameter based on the second image and the brightness-to-grayscale mapping strategy;
4) Determining the chromaticity detection result of the screen under test based on the first stimulus value, the second stimulus value, and the third stimulus value.

Optionally, the second determination module 704 is specifically configured to perform:

1) Determining the candidate stimulus value of the second stimulus parameter based on the first image and the brightness-to-grayscale mapping strategy;
2) Acquiring the calibration coefficient of the second stimulus parameter;
3) Calibrating the candidate stimulus value of the second stimulus parameter based on the calibration coefficient of the second stimulus parameter to obtain the second stimulus value of the second stimulus parameter.

Optionally, the parameter measurement apparatus may further include a calibration module configured to perform:

1) Acquiring the first calibration image captured under the first optical filter and determining the grayscale value of the first calibration image;
2) Acquiring the second calibration image captured under the second optical filter and determining the grayscale value of the second calibration image;
3) Determining the calibration coefficient of the second stimulus parameter based on the grayscale values of the first and second calibration images.

Optionally, the calibration module is further configured to perform:

1) Acquiring multiple calibration brightness values and acquiring different preset exposure durations;
2) Acquiring calibration images of the calibration screen for multiple calibration brightness values under each preset exposure duration;
3) Determining the calibration grayscale values corresponding to multiple calibration brightness values based on the calibration images;
4) Determining the brightness-to-grayscale mapping strategy corresponding to the preset exposure duration based on multiple calibration brightness values and calibration grayscale values.

Optionally, the calibration module is specifically configured to perform:

1) Acquiring the initial exposure duration;
2) Adjusting the initial exposure duration to obtain the adjusted exposure duration;
3) Based on the initial exposure duration and the adjusted exposure duration, determining different preset exposure durations.

Optionally, the calibration brightness value includes the intermediate calibration brightness value. Accordingly, the calibration module is specifically used to perform:

1) Under different exposure durations, obtaining the initial calibration image of the calibration screen corresponding to the intermediate calibration brightness value;
2) Determining the initial grayscale value corresponding to the initial calibration image;
3) Using the exposure duration of the initial calibration image corresponding to the initial grayscale value that meets the preset grayscale value as the initial exposure duration.

In specific implementations, the above modules can be implemented as independent entities or combined in any manner as one or several entities. The specific implementation methods and corresponding beneficial effects of the above modules can refer to the method embodiments mentioned earlier, which will not be repeated here.

The present disclosure embodiment also provides an electronic device. The electronic device can be a server or terminal, as shown in FIG. 8. It illustrates a schematic structural diagram of an electronic device according to an embodiment of the present disclosure.

The electronic device may include components such as a processor 801 with one or more processing cores, a memory 802 with one or more computer-readable storage medium, a power supply 803, and an input unit 804. Those skilled in the art can understand that the structure of the electronic device shown in FIG. 8 does not limit the electronic device, the electronic device may include more or fewer components than illustrated, or combine certain components, or arrange components differently. Among them:

The processor 801 is the control center of the electronic device, connecting various parts of the electronic device through various interfaces and circuits. By running or executing computer programs and/or modules stored in the memory 802 and invoking data stored in the memory 802, it performs various functions and processes data for the electronic device. Optionally, the processor 801 may include one or more processing cores; preferably, the processor 801 may integrate an application processor and a modem processor, where the application processor mainly handles the operating system, user interface, and applications, while the modem processor mainly handles wireless communication. It is understood that the modem processor may also not be integrated into the processor 801.

The memory 802 can be used to store computer programs and modules. The processor 801 executes various functional applications and data processing by running the computer programs and modules stored in the memory 802. The memory 802 may mainly include a program storage area and a data storage area, where the program storage area can store the operating system, computer programs required for at least one function (such as sound playback, image playback, etc.), and so on; the data storage area can store data created based on the use of the electronic device. Additionally, the memory 802 may also include high-speed random-access memory and non-volatile memory, such as at least one disk storage device, flash memory device, or other volatile solid-state memory devices. Correspondingly, the memory 802 may also include a memory controller to provide the processor 801 access to the memory 802.

The electronic device may also include a power supply 803 that provides power to various components. Preferably, the power supply 803 can be logically connected to the processor 801 through a power management system, thereby achieving functions such as charging, discharging, and power consumption management through the power management system. The power supply 803 may also include one or more DC or AC power sources, recharging systems, power failure detection circuits, power converters or inverters, power status indicators, and any other components.

The electronic device may also include an input unit 804, which can be used to receive input digital or character information and generate keyboard, mouse, joystick, optical, or trackball signal inputs related to user settings and function control.

Although not shown, the electronic device may also include a display unit, among others, which will not be elaborated here. Specifically, in this embodiment, the processor 801 in the electronic device will, according to the following instructions, load the executable files corresponding to one or more computer program processes into the memory 802 and run the computer programs stored in the memory 802 through the processor 801, thereby achieving various functions, such as:

> 1) Obtaining the target image of the screen under test at different preset exposure durations;
> 2) Determining the target grayscale value of the target image and obtaining the brightness-to-grayscale mapping strategy corresponding to different preset exposure durations;
> 3) Substituting the target grayscale value into the brightness-to-grayscale mapping strategy for mapping processing to obtain the target brightness value corresponding to the target grayscale value;
> 4) Determining the display parameter measurement result of the screen under test based on the target brightness value.

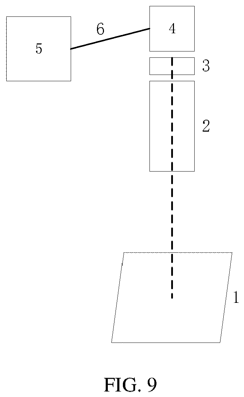

Optionally, the electronic device may also include an imaging lens and image sensors. In this case, the electronic device may be structured as shown in FIG. 9, where 1 represents the screen under test, 2 represents the imaging lens, 3 represents the optical filter (which can be a first optical filter, second optical filter, or third optical filter), 4 represents the image sensors, 5 represents the processor, and 6 represents the transmission line. By employing a simple structure, the display parameter measurement structure can be achieved with low requirements for the image sensors, thereby reducing costs.

The imaging lens and image sensors are used to capture target images. The field of view of the object plane corresponding to the imaging lens is equal to or greater than the first multiple of the diagonal length of the screen under test. This ensures that the emitted light parallel to the screen under test is captured, avoiding the influence of the viewing angle of the screen under test on the display parameter measurement results and improving the accuracy of the detection results. Optionally, the diagonal viewing angle of the imaging lens is less than or equal to the first angle.

For example, the first multiple can be 1.2 times, and the first angle can be 12°.

Optionally, the pixel count of the image sensors is greater than the second multiple of the pixel count of the screen under test, and the row pixels of the image sensors are parallel to the row pixels of the screen under test, while the column pixels of the image sensors are parallel to the column pixels of the screen under test. This avoids the occurrence of imaging moiré patterns, further improving the accuracy of the display parameter measurement results.

For example, the second multiple can be set to 4 times.

Optionally, the image sensors may be area array sensors, which adopt a global shutter and do not include an infrared cutoff filter.

Optionally, the imaging lens, optical filter, and image sensors may be mounted on a one-dimensional moving platform. A guide rail is provided below the moving platform to adjust the position of the imaging plane, and the position of the moving platform can be locked. The screen under test can be placed on a light-absorbing dark background plane.

The specific implementation methods and corresponding beneficial effects of the above operations can be referred to in the detailed description of the parameter measurement methods mentioned earlier and will not be repeated here.

A person skilled in the art can understand that all or part of the steps in the various methods of the above embodiments can be completed by a computer program or by controlling related hardware through a computer program. This computer program can be stored in a computer-readable storage medium and loaded and executed by a processor.

To this end, the present disclosure embodiment provides a computer-readable storage medium in which a computer program is stored. This computer program can be loaded by a processor to execute the steps of any parameter measurement method provided in the present disclosure embodiment. For example, the computer program can execute the following steps:

> 1) Obtain target images of the screen under test under different preset exposure durations;
> 2) Determine the target grayscale values of the target images and obtain the brightness-to-grayscale mapping strategies corresponding to different preset exposure durations;
> 3) Substitute the target grayscale values into the brightness-to-grayscale mapping strategies for mapping processing to obtain the target brightness values corresponding to the target grayscale values;
> 4) Determine the display parameter measurement results of the screen under test based on the target brightness values.

The specific implementation methods and corresponding beneficial effects of the above operations can be referred to in the previous embodiments and will not be repeated here.

The computer-readable storage medium may include: Read-Only Memory (ROM), Random Access Memory (RAM), magnetic disks, compact disks, etc.

Since the computer program stored in the computer-readable storage medium can execute the steps of any parameter measurement method provided in the present disclosure embodiment, it can achieve the beneficial effects of any parameter measurement method provided in the present disclosure embodiment. For details, refer to the previous embodiments, which will not be repeated here.

According to one aspect of the present disclosure, a computer program product or computer program is provided. This computer program product or computer program includes computer instructions stored in a computer-readable storage medium. The processor of the computer device reads the computer instructions from the computer-readable storage medium and executes them, enabling the computer device to perform the above-mentioned parameter measurement methods.

The above provides a detailed description of a parameter measurement method, device, electronic device, and computer storage medium as offered by the present disclosure. Specific examples have been used herein to explain the principles and implementation methods of the present disclosure. The descriptions of the above embodiments are merely intended to aid in understanding the methods and core concepts of the present disclosure. At the same time, for those skilled in the art, changes in specific implementation methods and application scopes may be made based on the ideas of the present disclosure. In summary, the content of this specification should not be construed as limiting the present disclosure.

**Claims**

1. A parameter measurement method, comprising:

    obtaining a target image of a screen under test at different preset exposure durations;
    determining a target grayscale value of the target images, and obtaining brightness-to-grayscale mapping strategies corresponding to the different preset exposure durations;
    substituting the target grayscale value into the brightness-to-grayscale mapping strategies for mapping processing to obtain a target brightness value corresponding to the target grayscale value; and
    determining a display parameter measurement result of the screen under test based on the target brightness value.

2. The parameter measurement method according to claim 1,
wherein the obtaining the target image of the screen under test at different preset exposure durations comprises:

    selecting a target exposure duration from the different preset exposure durations;
    obtaining the target image at the target exposure duration;
    wherein the determining the display parameter measurement result of the screen under test based on the target brightness value comprises:

    if the target brightness value meets a preset detection condition, determining the display parameter measurement result of the screen under test based on the target brightness value;
    if the target brightness value does not meet the preset detection condition, returning to the step of selecting the target exposure duration from the different preset exposure durations.

3. The parameter measurement method according to claim 1, wherein the determining the target grayscale value of the target image comprises:

    obtaining a transformation matrix between the screen under test and a camera used to obtain the target image;
    transforming the target image based on the transformation matrix to acquire a transformed image;
    determining the target grayscale value of the target image based on the transformed image.

4. The parameter measurement method according to claim 3, wherein the obtaining the transformation matrix between the screen under test and the camera comprises:

    determining multiple source point coordinates of the screen under test based on the target image;
    determining multiple target point coordinates corresponding to the camera based on a pixel count of the screen under test;
    determining the transformation matrix between the screen under test and the camera based on the source point coordinates and the target point coordinates.

5. The parameter measurement method according to claim 3, wherein the determining the target grayscale value of the target image based on the transformed image comprises:

    obtaining a row pixel count and a column pixel count of the screen under test, and obtaining a sampling rate of the transformed image relative to the screen under test;

dividing the transformed image based on the row pixel count and column pixel count of the screen under test to obtain multiple pixel clusters;

determining the target grayscale value of the target image based on the sampling rate and the pixel clusters.

6. The parameter measurement method according to claim 3, wherein the transforming the target image based on the transformation matrix to acquire the transformed image comprises:

based on the transformation matrix, performing transformation processing on the target image to obtain a candidate transformed image;

performing linear interpolation processing on the candidate transformed image to obtain the transformed image.

7. The parameter measurement method according to claim 3, wherein the obtaining the transformation matrix between the screen under test and the camera capturing the target image comprises:

determining multiple source point coordinates of the screen under test based on the target image;

determining multiple target point coordinates corresponding to the camera capturing the target image based on a pixel count of the screen under test;

determining the transformation matrix between the screen under test and the camera based on the source point coordinates and the target point coordinates.

8. The parameter measurement method according to claim 7,

wherein the target point coordinates include top-left corner coordinates, bottom-right corner coordinates, and top-right corner coordinates of an image sensor in the camera capturing the target image;

wherein the determining multiple target point coordinates corresponding to the camera capturing the target image based on the pixel count of the screen under test comprises:

obtaining a sampling ratio and determining the top-left corner coordinates of the image sensor in the camera capturing the target image based on the sampling ratio and a row pixel count of the screen under test;

determining the bottom-right corner coordinates of the image sensor in the camera based on the sampling ratio and a column pixel count of the screen under test;

determining the top-right corner coordinates of the image sensor in the camera based on the sampling ratio, the row pixel count, and the column pixel count of the screen under test.

9. The parameter measurement method according to claim 7, wherein the determining the transformation matrix between the screen under test and the camera based on the source point coordinates and the target point coordinates comprises:

determining a source point matrix based on the source point coordinates, and determining a target point matrix based on the target point coordinates;

multiplying the source point matrix by a matrix to be solved to obtain the target point matrix;

solving the matrix to be solved based on the source point matrix and the target point matrix to obtain the transformation matrix between the screen under test and the camera.

10. The parameter measurement method according to claim 1,

wherein the display parameter measurement result includes a chromaticity detection result, the target brightness value is a first stimulus value of a first stimulus parameter, and the target image is an image captured under a first optical filter;

wherein the determining the display parameter measurement result of the screen under test based on the target brightness value comprises:

acquiring a first image of the screen under test under different preset exposure durations through a second optical filter corresponding to a second stimulus parameter, and acquiring a second image of the screen under test under the different preset exposure durations through a third optical filter corresponding to a third stimulus parameter;

determining a second stimulus value of the second stimulus parameter based on the first image and the brightness to grayscale mapping strategy;

determining a third stimulus value of the third stimulus parameter based on the second image and the brightness to grayscale mapping strategy;

determining the chromaticity detection result of the screen under test based on the first stimulus value, the second stimulus value, and the third stimulus value.

11. The parameter measurement method according to claim 10, wherein the determining the second stimulus value of the second stimulus parameter based on the first image and the brightness to grayscale mapping strategy comprises:

determining a candidate stimulus value of the second stimulus parameter based on the first image and the brightness to grayscale mapping strategy;
obtaining a calibration coefficient of the second stimulus parameter;
calibrating the candidate stimulus value of the second stimulus parameter based on the calibration coefficient of the second stimulus parameter to obtain the second stimulus value of the second stimulus parameter.

12. The parameter measurement method according to claim 11, before the obtaining the calibration coefficient of the second stimulus parameter, further comprising:

obtaining a first calibration image collected under the first optical filter and determining a grayscale value of the first calibration image;
obtaining a second calibration image collected under the second optical filter and determining a grayscale value of the second calibration image;
determining the calibration coefficient of the second stimulus parameter based on the grayscale value of the first calibration image and the grayscale value of the second calibration image.

13. The parameter measurement method according to any one of claims 1-12, before the obtaining different preset exposure durations, further comprising:

obtaining multiple calibration brightness values and obtaining different preset exposure durations;
acquiring calibration images of a calibration screen for the multiple calibration brightness values under each of the preset exposure durations.
based on the calibration images, determining calibration grayscale values corresponding to the multiple calibration brightness values;
determining the brightness-to-grayscale mapping strategy corresponding to the preset exposure durations based on the multiple calibration brightness values and the calibration grayscale values.

14. The parameter measurement method according to claim 13, wherein the obtaining different preset exposure durations comprises:

obtaining an initial exposure duration;
adjusting the initial exposure duration to obtain an adjusted exposure duration;
determining the different preset exposure durations based on the initial exposure duration and the adjusted exposure duration.

15. The parameter measurement method according to claim 14, wherein the calibration brightness values include intermediate calibration brightness values, and the obtaining the initial exposure duration comprises:

acquiring initial calibration images of the calibration screen for the intermediate calibration brightness values under different exposure durations;
determining initial grayscale values corresponding to the initial calibration images;
using the exposure duration of the initial calibration image corresponding to the initial grayscale value that meets the preset grayscale value as the initial exposure duration.

16. A parameter measurement apparatus, comprising:

an image acquisition module, configured to acquire a target image of a screen under test at different preset exposure durations;
a first determination module, configured to determine a target grayscale value of the target image and obtain brightness-to-grayscale mapping strategies corresponding to different preset exposure durations;
a grayscale mapping module, configured to substitute the target grayscale value into the brightness to grayscale mapping strategies for mapping processing, to obtain a target brightness value corresponding to the target grayscale value;
a second determination module, configured to determine a display parameter measurement result of the screen under test based on the target brightness value.

17. An electronic device, comprising a processor and a memory, wherein the memory stores a computer program, and the processor is used to run the computer program in the memory to execute the parameter measurement method according to any one of claims 1 to 15.

18. The electronic device according to claim 17, wherein the electronic device further comprises an imaging lens and an image sensor, the imaging lens and the image sensor being configured capture the target image, and a field of view of object plane corresponding to the imaging lens being equal to or greater than a first multiple of a diagonal length of the screen under test.

**19.** The electronic device according to claim 18, wherein a pixel count of the image sensor is greater than a second multiple of a number of pixels of the screen under test, and row pixels of the image sensor are parallel to row pixels of the screen under test, and column pixels of the image sensor are parallel to column pixels of the screen under test.

**20.** A non-transitory computer-readable storage medium, wherein the computer-readable storage medium stores a computer program, and the computer program is adapted to be loaded by a processor to execute the parameter measurement method according to any one of claims 1 to 15.

The target image of the screen under test under different preset exposure durations is acquired ⟋ S101

↓

The target grayscale value of the target image is acquired, and brightness to gray mapping strategies corresponding to the different present exposure durations are determined ⟋ S102

↓

The target grayscale value is substituted into the brightness-to-grayscale mapping strategy for mapping to obtain the target brightness value corresponding to the target grayscale value ⟋ S103

↓

The display parameter measurement result of the screen under test is determined based on the target brightness value ⟋ S104

FIG. 1

The white field instrument displays the equal-energy white point coordinates

↓

Using the imaging lens, the first optical filter, and the area array sensor, the white field instrument is captured under the exposure duration t to obtain the first calibration image, and the grayscale value of the first calibration image is determined.

↓

Using the imaging lens, the second optical filter, and the area array sensor, the white field instrument is captured under the exposure duration t to obtain the second calibration image, and the grayscale value of the second calibration image is determined.

↓

Based on the grayscale values of the first and second calibration images, the calibration coefficient of the second stimulus parameter is determined.

↓

Using the imaging lens, the third optical filter, and the area array sensor, the white field instrument is captured under the exposure duration t to obtain the third calibration image, and the grayscale value of the third calibration image is determined.

↓

Based on the grayscale values of the first and third calibration images, the calibration coefficient of the third stimulus parameter is determined.

FIG. 2

FIG. 3

The white field instrument displays 6500k white light at n nits.

↓

The exposure time is adjusted so that the grayscale value of the central pixel of the initial calibration image obtained through the imaging lens, the first optical filter, and the area array sensor is 50% grayscale value.

↓

The white field instrument displays 6500k white light at n/2 nits.

↓

At the initial exposure time, the initial calibration image is collected through the imaging lens, the first optical filter, and the area array sensor, and the calibration grayscale value of this initial calibration image is g1.

↓

The white field instrument displays 6500k white light at 2n nits.

↓

The initial calibration image is collected through the imaging lens, the first optical filter, and the area array sensor, and the calibration grayscale value of this initial calibration image is g2.

↓

Based on n, n/2, 2n, 50% grayscale value, g1, and g2, fitting is performed to obtain the brightness-to-grayscale mapping sub-function (ft)

↓

Does the brightness-to-grayscale mapping strategy cover the local maximum brightness of the calibration screen?

No → The initial exposure time is adjusted to half of the initial exposure time. The white field instrument displays n1 nits of white light.

Yes

↓

The brightness-to-grayscale mapping sub-function is used as the brightness-to-grayscale mapping function (F) of the image sensor.

FIG. 4

FIG. 5

```
┌──────────────────────────────────────────────────────────────────────┐
│ The screen under test is placed at the imaging center of the camera,   │
│ and the position of the camera is adjusted so that the image field     │
│ covers the screen under test. The imaging lens is adjusted to focus.   │
└──────────────────────────────────────────────────────────────────────┘
                                   │
                                   ▼
┌──────────────────────────────────────────────────────────────────────┐
│ Through the imaging lens, the first optical filter, and the area array │
│ sensor, the target image of the screen under test is collected at the  │
│ target exposure time.                                                  │
└──────────────────────────────────────────────────────────────────────┘
                                   │
                                   ▼
┌──────────────────────────────────────────────────────────────────────┐
│ Based on the target image, the target grayscale value of the pixel     │
│ points on the screen under test is determined.                         │
└──────────────────────────────────────────────────────────────────────┘
                                   │
                                   ▼
┌──────────────────────────────────────────────────────────────────────┐
│ The first grayscale value is added to and subtracted from the target   │
│ grayscale value to obtain the calculated grayscale value. The          │
│ grayscale value between the target grayscale value and the calculated  │
│ grayscale value, as well as the target grayscale value and the         │
│ calculated grayscale value, are substituted into the brightness to     │
│ grayscale mapping function corresponding to the target exposure        │
│ duration to obtain the target brightness value of the pixel point on   │
│ the screen under test.                                                 │
└──────────────────────────────────────────────────────────────────────┘
                                   │
                                   ▼
            ◇ Does the target brightness value meet ◇ ── No ──▶ ┌────────────────────────────┐
            ◇ the preset detection conditions?      ◇           │ The target exposure        │
                                   │                             │ duration is adjusted by a  │
                                  Yes                            │ multiple to obtain an      │
                                   │                             │ adjusted exposure duration,│
                                   ▼                             │ the adjusted exposure      │
┌──────────────────────────────────────────────────┐            │ duration is set as the     │
│ Through the imaging lens, the second optical       │            │ target exposure duration.  │
│ filter, and the area array sensor, the first image │            └────────────────────────────┘
│ of the screen under test is captured under the     │
│ target exposure duration.                          │
└──────────────────────────────────────────────────┘
                                   │
                                   ▼
┌──────────────────────────────────────────────────┐
│ Based on the first image, the first target         │
│ grayscale value of the pixel point on the screen   │
│ under test is determined.                          │
└──────────────────────────────────────────────────┘
                                   │
                                   ▼
┌──────────────────────────────────────────────────┐
│ The first grayscale value is added to and          │
│ subtracted from the first target grayscale value   │
│ to obtain the first calculated grayscale value.    │
│ The grayscale value between the first target       │
│ grayscale value and the first calculated grayscale │
│ value, as well as the first target grayscale value │
│ and the first calculated grayscale value, are      │
│ substituted into the brightness to grayscale       │
│ mapping function corresponding to the target       │
│ exposure duration to obtain the candidate stimulus │
│ value of the second stimulus parameter of the      │
│ pixel point on the screen under test.              │
└──────────────────────────────────────────────────┘
                                   │
                                   ▼
┌──────────────────────────────────────────────────┐
│ The candidate stimulus value of the second         │
│ stimulus parameter is calibrated based on the      │
│ calibration coefficient of the second stimulus     │
│ parameter to obtain the second stimulus value of   │
│ the second stimulus parameter.                     │
└──────────────────────────────────────────────────┘
                                   │
                                   ▼
     ◇ Does the second stimulus value meet the first ◇ ── No ──▶ ┌────────────────────────────┐
     ◇ preset detection conditions?                  ◇           │ The target exposure        │
                                   │                             │ duration is adjusted by a  │
                                  Yes                            │ multiple to obtain an      │
                                   │                             │ adjusted exposure duration,│
                                   ▼                             │ the adjusted exposure      │
┌──────────────────────────────────────────────────┐            │ duration is set as the     │
│ Through the imaging lens, the third optical        │            │ target exposure duration   │
│ filter, and the area array sensor, the second      │            └────────────────────────────┘
│ image of the screen under test is captured under   │
│ the target exposure duration.                      │
└──────────────────────────────────────────────────┘
                                   │
                                   ▼
┌──────────────────────────────────────────────────┐
│ Based on the second image, the second target       │
│ grayscale value of the pixel point on the screen   │
│ under test is determined.                          │
└──────────────────────────────────────────────────┘
                                   │
                                   ▼
┌──────────────────────────────────────────────────┐
│ The first grayscale value is added to and          │
│ subtracted from the second target grayscale value  │
│ to obtain the second calculated grayscale value.   │
│ The grayscale value between the second target      │
│ grayscale value and the second calculated          │
│ grayscale value, as well as the second target      │
│ grayscale value and the second calculated          │
│ grayscale value, are substituted into the          │
│ brightness to grayscale mapping function           │
│ corresponding to the target exposure duration to   │
│ obtain the candidate stimulus value of the third   │
│ stimulus parameter of the pixel point on the       │
│ screen under test.                                 │
└──────────────────────────────────────────────────┘
                                   │
                                   ▼
┌──────────────────────────────────────────────────┐
│ The candidate stimulus value of the third stimulus │
│ parameter is calibrated based on the calibration   │
│ coefficient of the third stimulus parameter to     │
│ obtain the third stimulus value of the third       │
│ stimulus parameter.                                │
└──────────────────────────────────────────────────┘
                                   │
                                   ▼
     ◇ Does the third stimulus value meet the second ◇ ── No ──▶ ┌────────────────────────────┐
     ◇ preset detection conditions?                  ◇           │ The target exposure        │
                                   │                             │ duration is adjusted by a  │
                                  Yes                            │ multiple to obtain an      │
                                   │                             │ adjusted exposure duration,│
                                   ▼                             │ the adjusted exposure      │
┌──────────────────────────────────────────────────┐            │ duration is set as the     │
│ The target brightness value is output and the      │            │ target exposure duration.  │
│ target brightness value is used as the first       │            └────────────────────────────┘
│ stimulus value. The first stimulus value, the      │
│ second stimulus value, and the third stimulus      │
│ value may be normalized to obtain the chromaticity │
│ coordinates of the screen under test.              │
└──────────────────────────────────────────────────┘
```

FIG. 6

701

Image acquisition module

702

First determination module

703

Grayscale mapping module

704

Second determination module

FIG. 7

803

801

Power Supply

802

Memory

Processor

804

Input Unit

FIG. 8

FIG. 9

## INTERNATIONAL SEARCH REPORT

| International application No. |
| --- |
| **PCT/CN2023/137336** |

**A.    CLASSIFICATION OF SUBJECT MATTER**

H04N17/00(2006.01)i

According to International Patent Classification (IPC) or to both national classification and IPC

**B.    FIELDS SEARCHED**

Minimum documentation searched (classification system followed by classification symbols)

IPC： H04N

Documentation searched other than minimum documentation to the extent that such documents are included in the fields searched

Electronic data base consulted during the international search (name of data base and, where practicable, search terms used)

CNTXT: ENTXTC; WPABS; DWPI; VEN; ENTXT: 显示屏, 屏幕, 显示器, 检测, 测试, 检查, 灰度, 亮度, 曝光, display, screen, check+, test+, detect+, examin+, grey, level, value, scale, luminance, brightness, exposure, illumination, sensitometry

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 115183990 A (HANGZHOU GUANGLI TECHNOLOGY CO., LTD.) 14 October 2022 (2022-10-14)<br>      description, paragraphs [0022]-[0088] | 1-9, 16-20 |
| Y | CN 114827486 A (SUZHOU GACII OPTOELECTRONICS TECHNOLOGY CO., LTD.) 29 July 2022 (2022-07-29)<br>      description, paragraphs [0034]-[0062] | 1-9, 16-20 |
| Y | CN 115379200 A (GUANGDONG OPPO MOBILE COMMUNICATIONS CO., LTD.) 22 November 2022 (2022-11-22)<br>      description, paragraphs [0036]-[0044] | 2 |
| A | CN 109167928 A (WUHAN JINGCE ELECTRONIC GROUP CO., LTD.) 08 January 2019 (2019-01-08)<br>      entire document | 1-20 |
| A | CN 112308794 A (SHENZHEN TCL DIGITAL TECHNOLOGY CO., LTD.) 02 February 2021 (2021-02-02)<br>      entire document | 1-20 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 February 2024** | **07 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/137336**

| C. | DOCUMENTS CONSIDERED TO BE RELEVANT | |
|---|---|---|
| Category* | Citation of document, with indication, where appropriate, of the relevant passages | Relevant to claim No. |
| A | KR 20180012362 A (LG DISPLAY CO., LTD.) 06 February 2018 (2018-02-06)<br>entire document | 1-20 |
| A | US 11114051 B1 (TCL CHINA STAR OPTOELECTRONICS TECHNOLOGY CO., LTD.)<br>07 September 2021 (2021-09-07)<br>entire document | 1-20 |
| A | CN 105390087 A (CYBERNET SYSTEMS CO., LTD.) 09 March 2016 (2016-03-09)<br>entire document | 1-20 |

Form PCT/ISA/210 (second sheet) (July 2022)

## INTERNATIONAL SEARCH REPORT
### Information on patent family members

International application No.

**PCT/CN2023/137336**

| Patent document cited in search report | | | Publication date (day/month/year) | Patent family member(s) | | | Publication date (day/month/year) |
|---|---|---|---|---|---|---|---|
| CN | 115183990 | A | 14 October 2022 | CN | 115183990 | B | 23 December 2022 |
| CN | 114827486 | A | 29 July 2022 | | None | | |
| CN | 115379200 | A | 22 November 2022 | | None | | |
| CN | 109167928 | A | 08 January 2019 | CN | 109167928 | B | 03 November 2020 |
| CN | 112308794 | A | 02 February 2021 | WO | 2022089263 | A1 | 05 May 2022 |
| KR | 20180012362 | A | 06 February 2018 | KR | 102565592 | B1 | 10 August 2023 |
| US | 11114051 | B1 | 07 September 2021 | CN | 111968590 | A | 20 November 2020 |
| | | | | CN | 111968590 | B | 08 October 2021 |
| | | | | WO | 2022032777 | A1 | 17 February 2022 |
| CN | 105390087 | A | 09 March 2016 | KR | 20160026681 | A | 09 March 2016 |
| | | | | JP | 2016050983 | A | 11 April 2016 |
| | | | | TW | 201626351 | A | 16 July 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310075294